# EUROPEAN PATENT APPLICATION

(11) **EP 4 625 142 A1**
(43) Date of publication of application: **01.10.2025**
(21) Application number: 24219737.4
(22) Date of filing: 13.12.2024
(51) Int. Cl.: G06F 7/58

(54) **OPTICAL QUANTUM RANDOM NUMBER GENERATORS**

(30) Priority: 25.03.2024 GB 202404250
(71) Applicant: Kabushiki Kaisha Toshiba, Tokyo 105-0023 (JP)
(72) Inventor: SMITH, Peter Raymond, Cambridge, CB4 0GZ (GB); PARAISO, Taofiq Kolawole, Cambridge, CB4 0GZ (GB); SHIELDS, Andrew James, Cambridge, CB4 0GZ (GB); MARANGON, Davide, Cambridge, CB4 0GZ (GB)
(74) Representative: Marks & Clerk LLP

(57) **Abstract**

A quantum random number generator comprises a laser configured to emit a stream of phase-randomised pulses, an intensity controller configured to modulate a pair of pulses of the stream of phase-randomised pulses, a phase measurement element configured to convert a phase difference between the modulated pair of pulses into an intensity modulation at an output of the phase measurement element, and an optical detector optically coupled to the output of the phase measurement element.

## Description

### Technical Field

Embodiments described herein relate to quantum random number generators, in particular to optical quantum random number generators.

### Background

Random numbers are used in a variety of applications including cryptography, numerical simulations, or lotteries. Random numbers can be produced from Quantum Random Number Generators (QRNG). In QRNG, the source of randomness is physical and relies on the unpredictability of a measurement, and, in particular, the unpredictability relies on a quantum mechanical property. QRNGs can be implemented using gained-switched diode lasers. In gain-switched diode lasers, the lasing threshold is governed by spontaneous emission, which is a quantum mechanical process, such that the phase of the emitted pulse is random. By repeatedly switching the diode laser on and off, a stream of optical pulses, each having a random phase, can be generated. By measuring the random phase of each optical pulse in the stream of optical pulses, a sequence of random numbers can be obtained.

There is a continuing need to improve the performance of QRNGs based on gain-switched lasers.

### Brief Description of the Drawings

Embodiments of the invention will now be described, by way of example only, with reference to the accompanying schematic drawings, in which:
Figure 1 is a schematic illustration of a QRNG according to a comparative example;
Figure 2 is a schematic illustration of an example QRNG according to an embodiment;
Figure 3 shows the digitisation and processing of the output of a differential amplifier to obtain random numbers;
Figure 4 is a schematic illustration of an intensity profile of a laser pulse;
Figures 5 and 6 are schematic illustrations of a further example QRNG according to embodiments; and
Figures 7A-D and 8 show experimental data.

To avoid unnecessary repetition, like reference numerals will be used to denote like features in the figures.

### Detailed Description

In an embodiment, a new and useful optical Quantum Random Number Generator (QRNG) is provided which at least partially overcomes problems of conventional devices. For example, a conventional optical QRNG may employ a gain-switched semiconductor laser to generate phase-randomised optical pulses. Two of these phase-randomised optical pulses are then interfered to generate an interference pulse of random intensity. The intensity of the interference pulse is converted by a photodiode to provide an analog voltage signal which is digitised by an analog-to-digital (ADC) converter to be further processed to generate random numbers. A problem of conventional optical QRNGs is that (e.g. when the device is operated at a high repetition rate and/or when the device is implemented as a photonic integrated circuit) the voltage pulses provided by the photodiode are often too small to make optimal use of the dynamic range of the ADC (unless significant electronic amplification is used which introduces undesirable classical noise). This reduces the achievable random number generation rate. To this end, the present disclosure proposes a QRNG which uses an optical amplifier to amplify the intensity of the phase-randomised optical pulses (i.e. before the phase-randomised optical pulses are interfered) so that the interference pulses lead to voltage signals by the photodiode that make optimal use of the dynamic range of the ADC. Another problem of conventional optical QRNGs employing gain-switched lasers is that each of the generated phase-randomised pulses includes an initial portion of reduced coherence (as described in more detail below). In practice, this means that this portion of the pulse does not contribute to the desired interference signal but instead adds undesirable classical noise to the photodiode signal. To this end, the present disclosure proposes a QRNG which blocks the relevant initial (or "leading") portion of the pulse before the phase-randomised optical pulses are interfered (or at least reduces the relative intensity of the initial portion of the pulse compared to the later "useful portion" of the pulse). Another problem of conventional optical QRNGs is that the generated photodiode signal is often "contaminated" by classical noise (such as electrical crosstalk from the laser driving signal) which introduces undesirable correlations into the raw output. To this end, the present disclosure proposes a QRNG which employs two photodetectors arranged to detect complementary interference pulses. In this case, crosstalk and classical noise is supressed by taking the difference between outputs of the two photodetectors and generating the random numbers from this difference.

In an embodiment, a quantum random number generator (QRNG) is provided. The QRNG comprises a laser configured to emit a stream of phase-randomised pulses, an intensity controller configured to modulate (e.g. amplify or attenuate) a pair of pulses of the stream of phase-randomised pulses, a phase measurement element configured to convert a phase difference between the modulated pair of pulses into an intensity modulation at an output of the phase measurement element, and an optical detector optically coupled to the output of the phase measurement element.

In an embodiment, the intensity controller may be configured to modulate a pair of pulses of the stream of phase-randomised pulses such that for each pulse of the pair, an intensity of a leading portion of the pulse is reduced compared to an intensity of a trailing portion of the pulse.

In an embodiment, the intensity controller may comprise an optical amplifier (e.g. a semiconductor optical amplifier) configured to amplify the intensity of the pair of pulses.

In an embodiment, the optical amplifier may be configured to amplify the intensity of the trailing portion of the pulse more strongly than the intensity of the leading portion of the pulse.

In an embodiment, the intensity controller may be configured to modulate each emitted pulse by attenuating the intensity of the leading portion of the pulse more strongly than the intensity of the trailing portion of the pulse.

In an embodiment, the intensity controller element may comprise an electro-absorption modulator, a Mach-Zehnder modulator, or an optical switch.

In an embodiment, the phase measurement element may be a time delay interferometer configured to direct light from the optical amplifier towards two arms, at least one arm comprising an interferometer delay. Light from the two arms may be interfered with each other and directed to the output of the phase measurement element.

In an embodiment, the interferometer delay may be set to allow the interferometer to interfere the modulated pair of pulses (e.g. the interferometer delay may be equal to an integer multiple of a temporal separation between pulses in the stream of emitted pulses or the interferometer delay may be equal to the temporal separation between pulses in the stream of emitted pulses so that successive optical pulses are interfered by the interferometer).

In an embodiment, the QRNG may further comprise an optical detector assembly coupled to a first and a second output port of the time delay interferometer and configured to generate, as output signal, an analog signal indicative of a difference between the intensity at the first output and the second output of intensity at the second output of the time delay interferometer, and processing circuitry configured to generate random numbers based on the output signal of by the optical detector assembly.

In an embodiment, the optical detector assembly may comprise balanced photodetectors to generate the analog signal indicative of the difference between the intensity at the first output and the intensity at the second output of the time delay interferometer. Alternatively, the optical detector assembly may comprise a first optical detector and a second optical detector respectively coupled to the first and second output port of the time delay interferometer, and a differential amplifier configured to receive, as input signals, an analog signal provided by the first optical detector and an analog signal provided by the second optical detector, and to generate, as output signal, an analog signal indicative of a difference between inputs signals.

In an embodiment, the QRNG may further comprise a semiconductor substrate, and the components of the QRNG may be integrated on the semiconductor substrate to form a photonic integrated circuit.

In an embodiment, the laser may further be configured to emit the pulses at a repetition rate between 1 and 2 GHz, and each emitted pulse may have a pulse duration between 200 ps and 500 ps.

In an embodiment, a quantum random number generator (QRNG) is provided. The QRNG comprises a laser configured to emit a stream of phase-randomised pulses, a phase measurement element configured to convert a phase difference between two pulses from the stream of phase-randomised pulses into intensity modulations at a first and at a second output of the phase measurement element, an optical detector assembly coupled to the first and second output port of the phase measurement element and to generate, as output signal, an analog signal indicative of a difference between the intensity at the first output and the intensity at the second output of the phase measurement element, and processing circuitry configured to generate random numbers based on the output signal of by the optical detector assembly.

In an embodiment, the optical detector assembly may comprise balanced photodetectors to generate the analog signal indicative of the difference between the intensity at the first output and the intensity at the second output of the phase measurement element. Alternatively, the optical detector assembly may comprise a first optical detector and a second optical detector respectively coupled to the first and second output port of the phase measurement element, and a differential amplifier configured to receive, as input signals, an analog signal provided by the first optical detector and an analog signal provided by the second optical detector, and to generate, as output signal, an analog signal indicative of a difference between inputs signals.

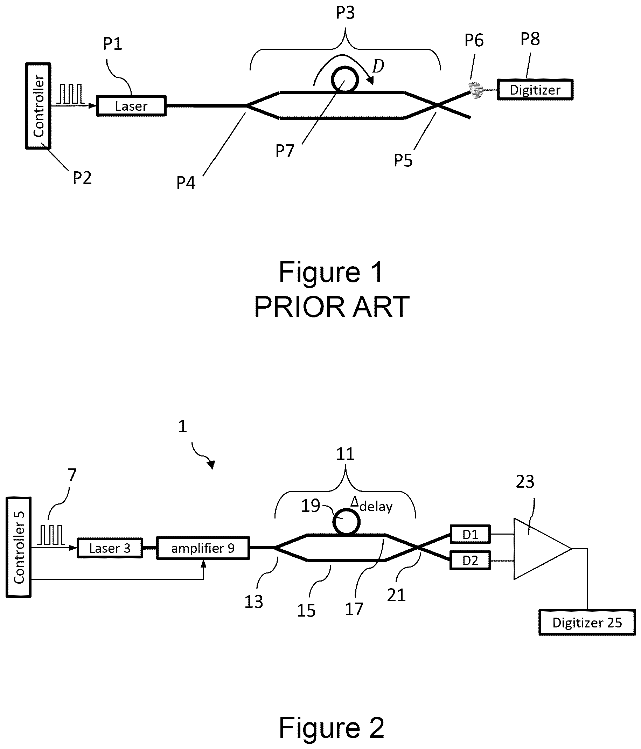

Before describing further proposed embodiments relating to Quantum Random Number Generators (QRNG), a design of an optical QRNG will now be described in detail with reference to Figure 1. This design employs a laser that emits optical pulses into an input port of a time delay interferometer (also referred to as an asymmetric Mach Zehnder interferometer (AMZI)). More specifically, Figure 1 shows a portion of a conventional optical QRNG that comprises a pulsed laser P1 driven at a fixed repetition rate by a controller P2 to output a steam of pulses. When the repetition rate is low enough, each pulse from the stream of pulses may have a random phase. The pulses are coupled into the time delay interferometer P3 via an input coupler P4. The time delay interferometer P3 comprises a short and a long arm. The long arm of the time delay interferometer P3 comprises a delay element P7, which delays the pulses by a time D with respect to the pulses travelling in the short arm. In this QRNG device, the delay element P7 is configured such that the delay D introduced is such that each delayed pulse temporally overlaps with a previous reference pulse in the reference arm. The delayed and reference pulses interfere in a 2x2 coupler P5 (or beam splitter) of the time delay interferometer P3, and the interference pulse is sent to a single photodetector P6 which converts the random intensity of the interference pulse into a voltage pulse of random intensity. This electrical signal corresponding to the intensities of the interference pulse has a random value because the phases of the reference and delayed pulses are random. Random numbers (e.g. a sequence of bits with random values) may be generated from the random intensities of the interfered pulses by digitising the electrical signal of the photodetector P6 using a digitiser P8.

Figure 2 shows an example optical quantum random number generator (QRNG) 1 according to an embodiment. In general, the QRNG 1 is configured to generate (and output) random numbers from the random intensity of interfered optical pulses. The QRNG 1 is typically provided as an integrated device (and described as such in the following), i.e. the components of the device 1 are integrated on a common semiconductor substrate (or on multiple semiconductor substrates that are appropriately assembled/connected). However, in other embodiments, the QRNG 1 may also be implemented using discrete (optical fibre pigtailed or free-space) components.

The optical device 1 comprises a semiconductor laser 3 (e.g. a distributed feedback (DFB) laser, a Fabry-Perot laser diode or the like) and a controller 5 for controlling the operation of the semiconductor laser 3. The semiconductor laser 3 is operative to emit coherent light. The semiconductor laser 3 is operated in pulsed operation (i.e. to emit a stream of optical pulses; e.g. nanosecond or picosecond long pulses). When operated in pulsed mode, the semiconductor laser 3 may be driven (by the controller 5) at a fixed repetition rate (e.g. at a fixed repetition rate selected from the range of 1 to 2 GHz) to output a steam of pulses having well-defined pulse durations and well-defined, regular temporal spacings (the temporal spacing between subsequently emitted pulses is denoted Δₗₐₛₑᵣ). More specifically, the semiconductor laser 3 can be a gain-switched semiconductor laser driven to output a stream of phase-randomised pulses (i.e. each pulse from the stream of pulses may have a random phase). In general, a gain-switched laser generates light when the laser is switched above the lasing threshold and generates almost no light when the laser is switched below the lasing threshold. Thus, the controller 5 may control a modulation of the gain of the laser 3 by modulating an electrical drive current applied to the laser 3 in a time varying manner (as indicated with reference numeral 7 in Figure 2). For example, the semiconductor laser 3 may be periodically switched above and below the lasing threshold by application of a time varying current. In this manner, the laser generates light pulses. It is to be understood that the controller 5 may comprise (or is connected to) appropriate driving circuitry to generate and apply such a time varying current.

The QRNG 1 further comprises an intensity controller configured to receive the phase-randomised pulses emitted by laser 3 and to modulate (e.g. amplify or attenuate) the optical intensity of the received pulses. More specifically, in the embodiment of Figure 2, the intensity controller is an optical amplifier 9 (e.g. a semiconductor optical amplifier). The optical amplifier 9 may be optically coupled to the laser 3 via an optical waveguide, via an optical free-space path or the like. The optical amplifier 9 is further configured to amplify the intensity of the received pulses and to output the "amplified pulses". The amplifier 9 can be operated in different modes as described further below in detail. In general, the controller 5 may be further configured to control the operation of the amplifier 9.

The optical device 1 further comprises a time delay interferometer 11 configured to receive the output of the amplifier 9. The time delay interferometer 11 acts as a phase measurement element that converts a phase differences between two received pulses into an intensity modulation. The time delay interferometer 11 comprises an input coupler 13, a short arm 15, a long arm 17 and an output coupler 21. The input coupler 13 is configured to direct light from the amplifier 9 towards the short and long arms 15, 17. The long arm 17 comprises a delay element (e.g. a delay line) configured to delay to an optical pulse propagating in the long arm 17 with respect to an optical pulse propagating in the short arm 15 by a delay time Δ_{delay}. The delay time Δ_{delay} is selected such that the delay time Δ_{delay} is an integer multiple of the temporal spacing Δₗₐₛₑᵣ (e.g. the temporal spacing Δₗₐₛₑᵣ can be equal to the delay time Δ_{delay}, or the delay time Δ_{delay} can be twice the temporal spacing Δₗₐₛₑᵣ, and so on). In this way, a pulse propagating in the long arm 17 is delayed by the delay element to interfere, at the output coupler 21, with a non-delayed pulse propagating in the short arm 15. The phases of the delayed and non-delayed pulses are random (since these pulses are generated in different cycles) and thus the intensities of the interfered pulses at the two output ports of the output coupler 21 have random values. Random numbers may be generated from the random intensities of the interfered pulses.

The QRNG 1 further comprises an optical detector assembly coupled to the output ports of the output coupler 21. In general, the optical detector assembly is configured to generate, as output signal, an analog signal indicative of a difference between the optical intensities at the output ports of the output coupler 21 (so that random numbers can be generated from this output signal of the optical detector assembly). In the embodiment of Figure 2, the optical detector assembly comprises photodetectors D1 and D2, each optically coupled to a different output port of the output coupler 21. The photodetectors D1 and D2 are configured to convert the random intensities of the interfered optical pulses into electrical signals (e.g. voltage pulses). The electrical signals provided by the detectors are generally analog signals (rather than, for example, binary "click" signals associated with single photons detectors). The photodetectors D1, D2 may be InP based on-chip photodiodes.

It is to be understood that the two detectors D1, D2 are arranged to detect "complementary" interference pulses since the detectors are coupled to different outputs of the time delay interferometer 11. For instance, interference of a particular pair of phase-randomised pulses may result in an interference pulse of increased intensity at detector D1 (due to predominantly constructive interference at the corresponding output port coupled to detector D1) and an interference pulse of correspondingly decreased intensity at detector D2 (due to predominantly destructive interference at the corresponding output port coupled to detector D2).

The QRNG 1 further comprises processing circuitry configured to generate random numbers from the analog signals provided by the photodetectors D1, D2. In particular, the processing circuitry may be configured to generate the random numbers based on a difference between the analog signal provided by the photodetector D1 and the analog signal provided by the photodetector D2. To this end, the QRNG 1 comprises a differential amplifier 23 which receives the analog signal provided by the photodetectors D1, D2 and determines a difference between these signals. The differential amplifier 23 may further amplify the determined difference by a predetermined gain. The differential amplifier 23 then outputs the (amplified) difference between the analog signals to a digitizer circuitry 25 which is configured to digitise the received signal and to extract random numbers from the digitised signal.

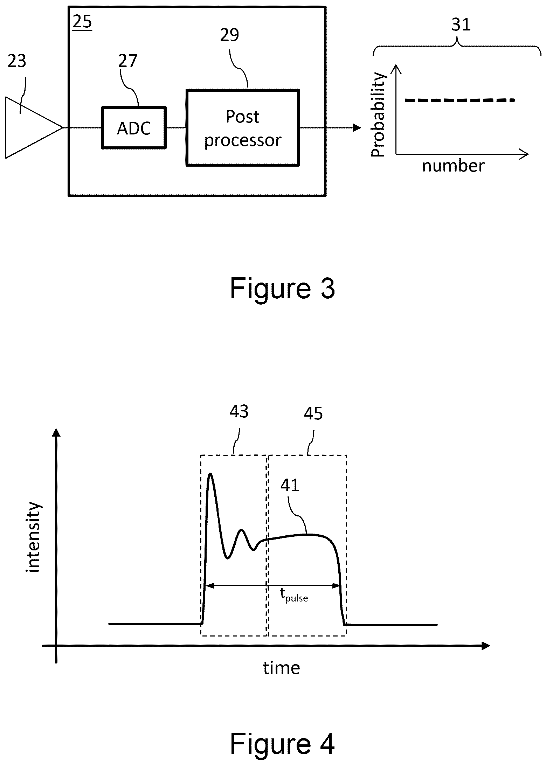

An embodiment of the digitizer circuitry 25 is shown in Figure 3. The digitizer circuitry 25 may comprise an analog-to-digital converter (ADC) 27 which converts the (amplified) difference between the photodetector signals into a digital signal. The ADC 27 is coupled to a post processor 29. The digital signals of generated by ADC 27 are provided to the post processor 29 which processes the digital signals using a randomness extractor algorithm and outputs a sequence of random numbers having a uniform probability distribution 31.

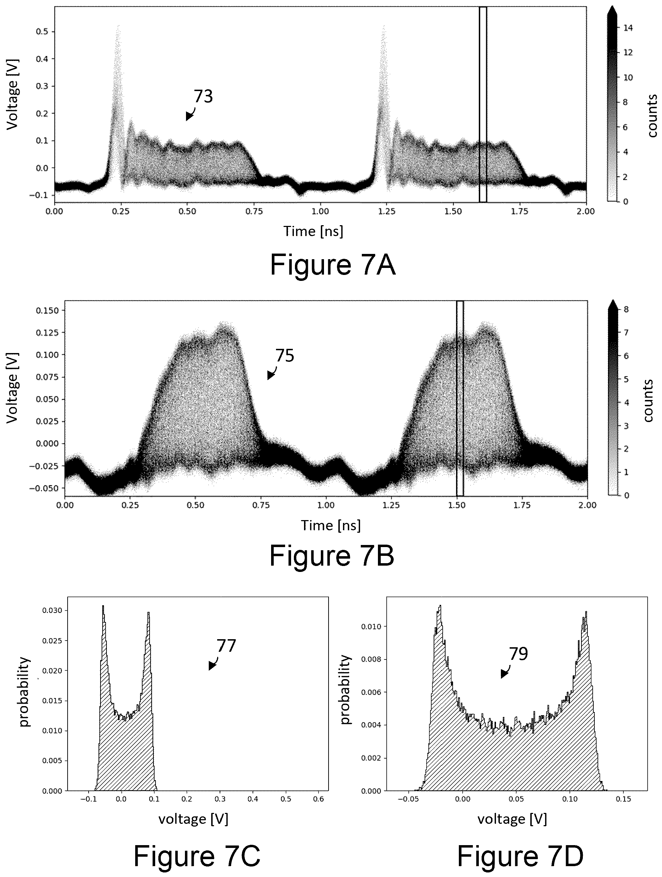

Advantageously, extracting random number from the difference between the analog signals provided by the photodetectors D1, D2 can result in a suppression of undesirable crosstalk and classical noise (e.g. classical noise introduced by the amplifier 9) as further described below with reference to Figure 7.

It is to be understood that other embodiments may not comprise the differential amplifier 23. In these embodiments, the photodetectors D1, D2 of the optical detector assembly may be arranged as balanced photodetectors to directly generate the analog signal indicative of the difference between the optical intensities at the output ports of the output coupler 21 (e.g. the photodetectors D1, D2 are arranged such that currents produced by the photodetectors are (directly) subtracted). The output of the balanced photodetectors may be provided to the digitizer circuitry 25 (e.g. directly or output of the balanced photodetectors may be electrical amplified and the amplified signal may be provided to the digitizer circuitry 25).

The operation of the amplifier 9 is now described in further detail. The amplifier 9 can be operated in a "continuous mode" or in "pulsed mode". For example, in a "continuous mode", the amplifier 9 is operated such that the intensity of an incoming pulse is amplified throughout the entire pulse duration. In this case, the amplifier 9 may be switched "on" continuously. The amplification provided by the amplifier 9 may increase the intensity of the phase-randomised pulses such that the amplitude of the analog signals produced by the detectors D1, D2 is increased. More specifically, the gain of the amplifier 9 may be selected so that the dynamic range of the ADC 27 (i.e. the range of signal amplitudes which the ADC 27 can resolve) is optimally (or at least better) used. In other words, the gain of the amplifier 9 may be selected such that the distributions of amplitude values of the analog signals produced by the detectors D1, D2 (i.e. the distributions of amplitude values that are formed by the amplitude values of a large number of interfered pulses) are such that the resulting distribution of difference values provided by the differential amplifier 23 substantially matches the dynamic range of the ADC 27. By making use of the full dynamic range of the ADC 27, a broader (i.e. more fine-grained) distribution of digitised difference values is generated (by the ADC 27) which increases the random number generation rate. In some embodiments, the gain of the optical amplifier 9, in the "continuous mode", may be at least 10 dB, at least 20 dB or at least 30 dB. The provision of the amplifier 9 is particularly advantageous in situations where QRNG 1 is implemented as a photonic integrated circuit (since in such implementations high losses in the waveguides can result in weak signals at the photodetectors D1, D2 which do not exploit the full dynamic range of the ADC).

The operation of the amplifier 9 in "pulsed mode" is now described with reference to Figure 4 which illustrates the temporal intensity profile 41 of a typical optical pulse generated by gain-switching the laser 3. The pulse 41 has typically a pulse duration tₚᵤₗₛₑ of between 200 ps and 500 ps.

In general, the optical output produced by a gain-switched laser does not simply follow the shape of the electrical driving signal (which is typically a rectangular or a Gaussian pulse). Instead, the temporal properties of optical emission depend on interplay between photons and electrically-injected carriers in the laser cavity, where carriers in semiconductor lasers typically have nanosecond-duration lifetimes. When a large current is first applied to the laser, carriers build up quickly and can temporarily overshoot the carrier density threshold. This results in a large emission of photons which subsequently deplete the carriers. The resulting interplay between photons and carriers causes damped oscillations (and corresponding phase fluctuations), known as "relaxation oscillations". These relaxation oscillations are gradually being damped to reach the steady-state. Thus, a gain-switched laser typically generates a rectangular-shaped pulse with an initial overshoot (as illustrated in Figure 4). Accordingly, the pulse 41 can be considered to comprise a front portion 43 (also referred to as "leading portion") and an end portion 45 (also referred to as "trailing portion"), where the front portion 43 of the pulse 41 may have a lower temporal coherence than the end portion 45. The front portion 43 extends from the leading edge of the pulse 41 to an intermediate point of the pulse 41. The end portion 45 extends from the intermediate point to the trailing edge of the pulse 41.

As noted above, the front portion 43 comprises the leading edge of the pulse 41, i.e. the initial, "non-steady state" phase of pulse 41. Thus, the front portion 43 may comprise large, sharp intensity peaks caused due to the relaxation oscillations. In particular, the front portion 43 may comprise a damped oscillation in the light intensity at the onset of the pulse. The front portion 43 of the pulse typically exhibits a frequency chirp due to the change of the index of refraction inside the laser cavity related to the changing carrier density. As a result of the frequency chirp, the front portion 43 has a reduced coherence and consequently results in a reduced (or entirely suppressed) interference signal. In other words, the front portions of the phase-randomised pulses do not contribute (significantly) to the interference signal from which random numbers can be extracted. Instead, the front portion 43 of the pulse 41 contributes undesirable (classical) noise to the photodetector signals. Although the duration of the front portion 43 generally depends on details of the laser and the driving current, in many cases the front portion 43 lasts for at least 50 ps (e.g. between 50 ps to 200 ps). In one embodiment, the duration of the front portion 43 may be in the range of 10% to 40% of the total duration of the pulse 41.

The end portion 45 comprises the later, "steady-state" phase of the pulse 41 (i.e. the end portion 45 comprises the residual portion of the pulse 41 which follows the front portion 43). The intensity in the end portion 45 is generally constant. Importantly, the optical frequency of the pulse 41 is generally constant in the end portion 45, so that these end portions of the pulses result in the desired random interference signals from which random numbers can be extracted as described above.

In "pulsed mode", the amplifier 9 is operated to amplify only the end portion 45 of the pulse 41 (or to amplify the end portion 45 (significantly) stronger than the front portion 43). To this end, the controller 5 may appropriately synchronise the operation of the amplifier 9 with the driving current pulses provided to the laser 3. In other words, the controller may control the amplifier 9 so that the gain provided by the amplifier 9 is significantly higher during the end portions of the received pulses than during the front portions. In some embodiments, the gain of the optical amplifier 9 during the end portion 45 of the pulse 41 may be at least 10 dB, at least 20 dB or at least 30 dB higher than during the front portion 43 of the pulse 41.

This temporally-selective amplification effectively reduces the relative contribution of the initial, "non-steady state" part of the pulses to the signals detected by the photodetectors D1, D2 compared to the contribution of the later, "steady-state" part of the pulses. As a consequence, the signals generated by the photodetectors D1, D2 exhibit less classical noise. In addition, the amplification in "pulsed mode" may result in a desirable broadening of the distribution of the values generated by the differential amplifier 23 to better match the dynamic range of the ADC 27 as described above with reference to the "continuous mode" of the amplifier 9.

It is to be understood that although not shown in Figure 2, the QRNG 1 may comprise further elements, for example, (adjustable) attenuators to compensate any difference in the optical losses accumulated in the short and long arms 15, 17 (to ensure that the delayed and non-delayed pulses enter the output coupler 21 having substantially the same intensity).

Additionally or alternatively, the input coupler 13 may have an adjustable combining ratio (i.e. the combining ratio can be changed during use; i.e. typically by employing an electro-optic or a thermo-optic effect). In an embodiment, the input coupler 13 may comprise a tuneable Mach-Zehnder interferometer for adjusting the combining ratio.

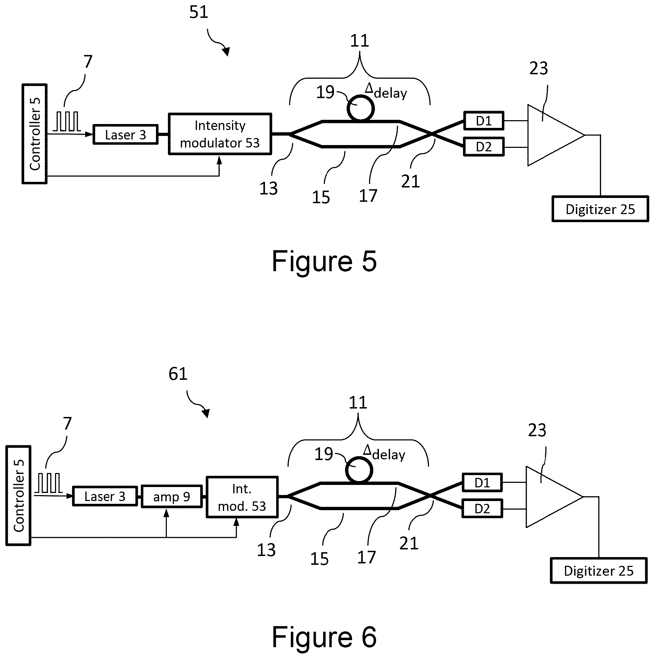

Figure 5 shows a variation on the QRNG of Figure 2 (to avoid unnecessary repetition, like reference numerals will be used to denote like features). The QRNG 51 of Figure 5 comprises the same components as the QRNG 1 of Figure 2 and operates in substantially the same way except that the QRNG 51 of Figure 5 comprises, as intensity controller, an intensity modulator 53 instead of the optical amplifier 9.

The intensity modulator 53 is configured to receive the pulses emitted by laser 3, modulate the intensity of the received pulses and provide the modulated pulses to the time delay interferometer 11. Similar to the above-described amplifier 9 (when operated in "pulsed mode"), the intensity modulator 53 modulates each emitted pulse such that the intensity of a front portion 43 of the pulse 41 is reduced compared to the intensity of the end portion 43. The intensity modulator 53 achieves this by attenuating the intensity of the front portion 43 of the pulse 41 more strongly than the intensity of the end portion 45. In other words, the intensity modulator 53 "carves" the received pulses to block undesired optical signals from reaching the photodetectors D1, D2. To this end, the controller 5 may be configured to synchronise the attenuation provided by the intensity modulator 53 with the electrical driving signal provide to laser 3. In embodiments, the intensity modulator may be implemented as an electro-absorption modulator, a Mach-Zehnder modulator, or an optical switch. In some embodiments, the optical attenuation of the intensity modulator 53 during the front portion 43 of the pulse 41 may be at least 10 dB, at least 15 dB or at least 20 dB higher than during the end portion 45 of the pulse 41.

This selective attenuation effectively reduces the relative contribution of the initial, "non-steady state" part of the pulses to the signals detected by the photodetectors D1, D2 compared to the contribution of the later, "steady-state" part of the pulses. As a consequence, the signals generated by the photodetectors D1, D2 exhibit less classical noise.

In another variation (illustrated in Figure 6), the QRNG 61 may comprise the intensity modulator 53 (as described with reference to Figure 5) in addition to the amplifier 9 (as described with reference to Figure 2). In this case, the amplifier 9 may be operated in the "continuous mode" (as described above), while the intensity modulator 53 "carves" the front portions of the pulses (as described above). The intensity modulator may be upstream or downstream to the amplifier. Although shown in Figure 6 as individual components, in embodiments, the amplifier 9 and the modulator 53 may be provided as an integrated component.

Figures 7A-D show experimental data obtained by a first example QRNG (the first example device is configured as described above with reference to Figure 2; in particular the first example QRNG is implemented as an (unpackaged) photonic integrated circuit with a semiconductor optical amplifier operated in continuous or pulsed mode). Figure 7A shows an accumulated oscilloscope trace 73 generated by a (single) photodiode detecting optical pulses generated by gain-switching the laser 3. As described above with reference to Figure 4, the optical pulse 73 includes an initial portion with large, sharp intensity peaks and a later, steady-state portion. Figure 6B shows an accumulated oscilloscope trace 75 of optical pulses after the intensity modulator 53 attenuated the front end of the pulse (as described above with reference to Figure 5). It can be seen that the resulting pulse 75 does no longer comprise the (undesired) initial non-steady state phase while the (desired) steady-state portion remains essentially unchanged (i.e. unattenuated). Histograms 77, 79 of the voltage values corresponding to pulses 73 and 75 are shown in Figures 7C and 7D. It can be seen that both histograms 77, 79 generally follow an arcsine distribution as expected for interference pulses generated by pulses having random uniformly-distributed phases.

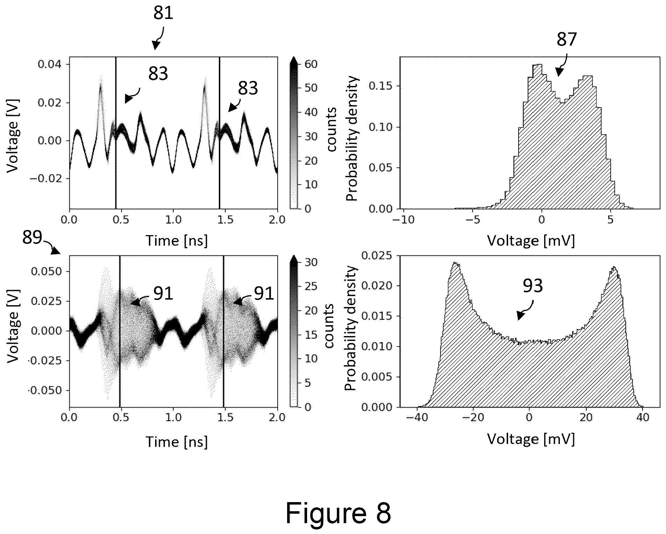

Figure 8 shows further experimental data obtained by a second example QRNG which is configured similar to the first example QRNG used to obtain the data of Figure 7 but which, unlike the first example device, is implemented in as a packaged photonic integrated circuit. The top row of Figure 8 shows a heatmap 81 of signals generated by a single photodetector (e.g. photodetector D1) detecting the interference pulses generated by interference of two phase-randomised pulses emitted by laser 3 (for the experimental data shown in Figure 8, the amplifier was operated in the continuous mode (i.e. not in the pulsed mode)). In addition to the signals caused by the interference pulse, the generated signals 83 include large crosstalk contributions from the electrical laser driving signal. This crosstalk is significantly stronger in the packaged photonic integrated circuit than in the unpackaged photonic integrated circuit (Figures 7A-D) because the electrical lines/wires carrying the laser drive current and the electrical lines/wires carrying the photodetector signals are necessarily closer together than in the unpackaged first example device . Also shown in the top row of Figure 8 is a histogram 87 corresponding to the heatmap of 81. It can be seen that the two peaks of the histogram 87 are poorly resolved.

The bottom top row of Figure 8 shows a heatmap 89 of signals generated by differential amplifier 23 (i.e. heatmap 89 shows the difference between the signals of photodetectors D1 and D2). It can be seen that the aforementioned crosstalk is strongly suppressed by amplifying the difference of the two photodetector outputs with the differential amplifier 23. Thus, undesirable crosstalk - which is particularly pronounced in highly integrated devices - can be significantly reduced by using the difference of the two photodetector outputs. The signals 91 corresponding to the interference pulses show the expected random distribution of values. Advantageously, the width of the corresponding histogram 83 is significantly broader than the width of the histogram 87 (which reduces the need for further electrical amplification), and the two peaks of the histogram 93 are much more clearly resolved.

Whilst certain embodiments have been described, these embodiments have been presented by way of example only, and are not intended to limit the scope of the inventions. Indeed, the novel devices, and methods described herein may be embodied in a variety of other forms; furthermore, various omissions, substitutions and changes in the form of the devices, methods and products described herein may be made without departing from the spirit of the inventions. The accompanying claims and their equivalents are intended to cover such forms or modifications as would fall within the scope and spirit of the inventions.

## Claims

1. A quantum random number generator (QRNG) comprising:
a laser configured to emit a stream of phase-randomised pulses;
an intensity controller configured to modulate a pair of pulses of the stream of phase-randomised pulses;
a phase measurement element configured to convert a phase difference between the modulated pair of pulses into an intensity modulation at an output of the phase measurement element, and
an optical detector optically coupled to the output of the phase measurement element.

2. The QRNG of claim 1, wherein the intensity controller is configured to modulate a pair of pulses of the stream of phase-randomised pulses such that for each pulse of the pair, an intensity of a leading portion of the pulse is reduced compared to an intensity of a trailing portion of the pulse.

3. The QRNG of claim 1 or 2, wherein the intensity controller comprises an optical amplifier configured to amplify the intensity of the pair of pulses.

4. The QRNG of claim 3, wherein the optical amplifier is configured to amplify the intensity of the trailing portion of the pulse more strongly than the intensity of the leading portion of the pulse.

5. The QRNG of claim 3 or 4, wherein the intensity control element comprises a semiconductor optical amplifier.

6. The QRNG of claim 2, wherein the intensity controller is configured to modulate each emitted pulse by attenuating the intensity of the leading portion of the pulse more strongly than the intensity of the trailing portion of the pulse.

7. The QRNG of any preceding claim, wherein the phase measurement element is a time delay interferometer configured to direct light from the optical amplifier towards two arms, at least one arm comprising an interferometer delay, and wherein light from the two arms are interfered with each other and directed to the output of the phase measurement element.

8. The QRNG of claim 7, wherein the interferometer delay is set to allow the interferometer to interfere the modulated pair of pulses.

9. The QRNG of either of claims 7 or 8, further comprising:
an optical detector assembly coupled to a first and a second output port of the time delay interferometer and configured to generate, as output signal, an analog signal indicative of a difference between the intensity at the first output and the second output of intensity at the second output of the time delay interferometer, and
processing circuitry configured to generate random numbers based on the output signal of by the optical detector assembly.

10. The QRNG of claim 9, wherein the optical detector assembly comprises balanced photodetectors to generate the analog signal indicative of the difference between the intensity at the first output and the intensity at the second output of the time delay interferometer.

11. The QRNG of claim 9, wherein the optical detector assembly comprises a first optical detector and a second optical detector respectively coupled to the first and second output port of the time delay interferometer, and a differential amplifier configured to receive, as input signals, an analog signal provided by the first optical detector and an analog signal provided by the second optical detector, and to generate, as output signal, an analog signal indicative of a difference between inputs signals.

12. The QRNG of any preceding claim further comprising a semiconductor substrate, and wherein the components of the device are integrated on the semiconductor substrate to form a photonic integrated circuit.

13. A quantum random number generator (QRNG) comprising:
a laser configured to emit a stream of phase-randomised pulses;
a phase measurement element configured to convert a phase difference between two pulses from the stream of phase-randomised pulses into intensity modulations at a first and at a second output of the phase measurement element;
an optical detector assembly coupled to the first and second output port of the phase measurement element and configured to generate, as output signal, an analog signal indicative of a difference between the intensity at the first output and the intensity at the second output of the phase measurement element, and
processing circuitry configured to generate random numbers based on the output signal of by the optical detector assembly.

14. The QRNG of claim 13, wherein the optical detector assembly comprises balanced photodetectors to generate the analog signal indicative of the difference between the intensity at the first output and the intensity at the second output of the phase measurement element.

15. The QRNG of claim 13, wherein the optical detector assembly comprises a first optical detector and a second optical detector respectively coupled to the first and second output port of the phase measurement element, and a differential amplifier configured to receive, as input signals, an analog signal provided by the first optical detector and an analog signal provided by the second optical detector, and to generate, as output signal, an analog signal indicative of a difference between inputs signals.
